# FASCICULE DE BREVET EUROPEEN

(11) **EP 3 152 542 B1**
(45) Date de publication et mention de la délivrance du brevet: **28.07.2021**
(21) Numéro de dépôt: 15732051.6
(22) Date de dépôt: 03.06.2015
(51) Int. Cl.: G01N 1/22

(54) **ENSEMBLE DE PRELEVEMENT ET DE TRANSPORT DE NANO-OBJETS CONTENUS DANS DES AEROSOLS, AVEC CASSETTE A OUVERTURE SECURISEE LORS DU PRELEVEMENT**
ANORDNUNG ZUM AUFNEHMEN UND TRANSPORTIEREN VON IN AEROSOLEN ENTHALTENEN NANOOBJEKTEN MIT EINER KASSETTE, DEREN ÖFFNUNG WÄHREND DER PROBENNAHME GESICHERT IST
ASSEMBLY FOR PICKING AND TRANSPORTING NANOOBJECTS CONTAINED IN AEROSOLS, WITH A CASSETTE THE OPENING OF WHICH IS SECURED DURING THE SAMPLING

(30) Priorité: 04.06.2014 FR 1455051
(43) Date de publication de la demande: 12.04.2017
(73) Titulaire: Commissariat à l'Énergie Atomique et aux Énergies Alternatives, 75015 Paris (FR); Institut Technique des Gaz et de l'Air, 35760 Saint-Grégoire (FR)
(72) Inventeur: CLAVAGUERA, Simon, F-38000 Grenoble (FR); BROUARD, Christophe, F-38000 Grenoble (FR); HEBERT, Guillaume, F-38700 La Tronche (FR); DECOLIN, Eric, F-38330 Montbonnot Saint Martin (FR); DE THOURY, Raphael, 77183 Croissy-Beaubourg (FR); FAURE, Bertrand, F-38000 Grenoble (FR)
(74) Mandataire: Nony
(86) Numéro de dépôt international: PCT/IB2015/054209
(87) Numéro de publication internationale: WO 2015/186081

(56) Documents cités:
- EP-A2- 1 327 133
- WO-A1-2014/001936
- WO-A1-2014/081314
- DE-A1-102006 018 347
- FR-A1- 2 981 154
- None

## Description

### Domaine technique

La présente invention concerne le domaine de la collecte et de l'analyse des nanoparticules susceptibles d'être présentes en suspension dans l'air.

Elle concerne plus particulièrement la réalisation d'un ensemble de prélèvement et de transport de nano-objets contenus dans des aérosols, à cassette d'échantillonnage.

La présente invention vise à augmenter la sécurisation de l'ouverture d'une telle cassette afin de garantir l'intégrité du prélèvement.

### Etat de la technique

L'essor rapide des nanotechnologies rend indispensable la poursuite des travaux sur les impacts sanitaires et environnementaux de ces nouveaux matériaux afin d'avoir des conditions de sécurité optimales. Depuis quelques années, les nanoparticules, c'est-à-dire des particules de dimensions nanométriques ont fait l'objet d'intenses recherches et leur usage a commencé à se répandre dans divers domaines tels que la santé, la microélectronique, les technologies de l'énergie ou les produits de consommation courante tels que peintures et cosmétiques. Il est donc nécessaire de mettre au point des méthodes d'évaluation et de suivi de l'exposition aux nanoparticules des travailleurs, des consommateurs et de l'environnement.

Le développement de méthodes fiables d'échantillonnage et d'analyse d'aérosols est ainsi un enjeu crucial en termes de santé publique et de prévention des risques au poste de travail. En particulier, le développement de dispositifs de prélèvement adaptés pour être portatifs et être fixés à l'unité à une combinaison de travail d'un travailleur en poste de fabrication de nano-objets ou d'élaboration de nanomatériaux pourrait s'avérer impératif.

La méthode de choix de prélèvement ou d'échantillonnage, c'est-à-dire actuellement privilégiée, consiste à aspirer un flux d'air susceptible d'être chargé en particules à travers un filtre qui est analysé ex post par diverses techniques (gravimétrique, microscopie, XRF, ...).

De l'art antérieur, il est déjà connu des dispositifs de prélèvement, aussi appelés échantillonneurs à cassette, qui sont portatifs et qui doivent échantillonner une contamination aérosol susceptible d'être inhalée par la bouche et le nez d'un individu lors de sa respiration.

Un échantillonneur est un appareil qui comporte notamment des moyens d'aspiration et sur lequel est fixée, en général de manière amovible une cassette d'échantillonnage logeant au moins un filtre de prélèvement des contaminants par aspiration.

Ainsi, le brevet US 4,961,916 concerne un dispositif de prélèvement de polluants gazeux et particulaires comprenant une cassette à l'intérieur de laquelle trois filtres sont empilés les uns sur les autres et comprenant deux orifices de part et d'autre de ces filtres, l'un débouchant dans l'environnement extérieur susceptible d'être pollué et l'autre sur un tuyau connecté à une pompe d'aspiration. Ainsi, d'amont en aval, lors de l'aspiration par la pompe, le premier filtre permet de ne collecter que la fraction particulaire de l'aérosol, le deuxième, préalablement imprégné d'un réactif permet de réagir sélectivement avec un ou plusieurs composés gazeux et le troisième filtre n'a qu'une fonction de ligidification de l'ensemble filtrant. Le prélèvement visé dans ce brevet est la collecte d'isocyanates gazeux et particulaires qui se trouvent dans de l'air pollué.

Le brevet US 5,205,155 divulgue quant à lui un dispositif de prélèvement de fibres d'amiantes susceptibles d'être en suspension dans l'air et s'intéresse au dépôt non uniforme sur le filtre logé dans la cassette d'échantillonnage. Le brevet, propose pour y remédier de conformer l'entrée de cassette, c'est-à-dire celle à proximité de l'orifice d'aspiration de l'environnement concerné, sous forme évasée et de la rendre lisse afin de favoriser un dépôt homogène de particules sur le filtre.

La demande de brevet US 2008/0196514A1 concerne un dispositif de prélèvement individuel de poussières utilisé pour collecter la fraction inhalable de particules aéroportées. Ce brevet décrit différents rapports de forme de la cassette (rapports entre longueur L et diamètre d'entrée D de l'ouverture) qui, d'après lui, permettent d'améliorer le prélèvement par aspiration. De plus, ce brevet mentionne que pour avoir la meilleure représentativité de l'inspiration par le nez, il est avantageux de prévoir une orientation verticale du flux d'air aspiré du bas vers le haut.

La demande de brevet US 2009/0272202A1 concerne un dispositif de prélèvement individuel de nanoparticules comportant une cassette avec différents étages de sélection de particules selon leur taille. Le dispositif divulgué comporte un ensemble d'assemblage des différents étages entre eux avec plaques d'assemblage maintenues ensemble par des ressorts et des tiges de guidage qui servent au guidage lors de l'assemblage.

La demande de brevet WO2014/081314 divulgue un dispositif de collecte de traces volatiles dans lequel un filtre est logé et maintenu dans un premier boitier en deux parties vissées l'une à l'autre le premier boitier étant lui-même logé et maintenu dans un deuxième boitier en deux parties vissées l'une à l'autre.

La demande de brevet DE102006018347 s'intéresse à la collecte de fumée de silice et décrit un dispositif de prélèvement avec un boitier en plastique en deux parties, l'orifice d'amenée de l'air chargé fumée de silice étant intégré à la partie supérieure, tandis que la partie inférieure supporte un filtre. Le dispositif est intégré dans un appareil avec un connecteur de type Luer-Lock qui assure la fixation et l'étanchéité entre les deux parties.

La demande de brevet EP 1327133 divulgue une cassette de prélèvement constituée de deux pièces simplement montées l'une sur l'autre avec interposition d'un joint torique comprimé entre les deux.

Toutes les méthodes et dispositifs de prélèvement d'aérosols de l'état de l'art telles que décrits présentent un ou plusieurs inconvénients majeurs que l'on peut résumer ainsi:
- la plupart des méthodes d'échantillonnage d'aérosols, impose une extraction du filtre de sa cassette in situ, c'est-à-dire sur le lieu du prélèvement. Les dispositifs de mise en œuvre sont donc prévus pour ouvrir la cassette aisément et par n'importe quelle personne: une ouverture avec extraction intempestive peut donc se traduire par des contaminations extérieures au filtre, par une perte de matière adsorbée sur le filtre ou par une mauvaise traçabilité du filtre. Notamment, un opérateur travaillant en poste de fabrication de nano-objets ou d'élaboration de nanomatériaux peut ouvrir de manière intempestive une cassette, contaminer un filtre, en mettre un déjà utilisé....
- toutes les cassettes en configuration de prélèvement, c'est-à-dire en configuration fixée sur l'appareil de prélèvement (échantillonneur), peuvent tout de même être ouvertes par l'opérateur car, ces dernières sont accessibles de toutes parts. Ceci ne permet pas de laisser un échantillonneur sans surveillance à des groupes d'utilisateurs non habilités à l'ouverture sans certitude que la cassette n'ait pas été démontée et donc, que l'analyse de l'échantillon/prélèvement soit invalidée par la suite.

Les inventeurs de la présente demande ont proposé dans la demande de brevet FR 2981154, une cassette de prélèvement à deux pièces assemblées l'une à l'autre par des moyens de clipsage non accessibles depuis l'extérieur. Ainsi, ces moyens de clipsage ne peuvent être physiquement atteints que par le biais de pions logés individuellement dans des trous mais ne peuvent l'être manuellement ou en utilisant un quelconque outil depuis l'espace extérieur à la cassette dans la configuration assemblée des deux pièces. Grâce aux moyens de clipsage, la cassette est ainsi sécurisée car elle ne peut être ouverte de manière intempestive, son ouverture pour l'analyse proprement dite de l'échantillon nécessitant un outil adéquat pour séparer les deux pièces de la cassette.

Si cette sécurisation de l'ouverture de la cassette convient parfaitement dans la majorité des situations, les inventeurs ont cependant analysé qu'il subsistait encore une situation d'ouverture intempestive, dans le cas où une personne non habilitée disposerait de pions de désassemblage l'une de l'autre des deux pièces de la cassette. En d'autres ternies, il subsiste encore un risque d'ouverture de la cassette d'échantillonnage selon la demande FR 2981154, même si ce risque est minime.

Le but général de l'invention est alors de pallier tout ou partie des inconvénients de l'art antérieur et notamment d'améliorer la cassette selon la demande de brevet FR2981154, et donc de proposer une solution qui garantisse l'intégrité du prélèvement réalisé par un dispositif de prélèvement et de transport de nano-objets susceptibles d'être présents dans un aérosol et d'assurer à coup sûr la traçabilité du prélèvement jusqu'à l'analyse élémentaire proprement dite, même dans une situation où une personne non habilitée disposerait de moyens adéquats d'ouverture de la cassette du dispositif en configuration assemblée.

On précise que l'analyse élémentaire est une analyse permettant de déterminer quels éléments atomiques (Titane, Carbone, Nickel...) sont présents ainsi que leur pourcentage atomique dans l'échantillon. Par contre, une analyse élémentaire ne permet pas de déterminer la structure ou l'assemblage de ces éléments entre eux.

Un but particulier de l'invention est de proposer un dispositif de ce type qui soit simple de réalisation et peu coûteux.

### Exposé de l'invention :

Pour ce faire, l'invention a tout d'abord pour objet un ensemble de prélèvement et de transport de nano-objets susceptibles d'être présents dans un aérosol en vue de leur analyse, comprenant :
- un dispositif comprenant un filtre d'échantillonnage poreux apte à piéger des nano-objets susceptibles d'être en suspension dans l'aérosol, une cassette constituée d'une première pièce et d'une deuxième pièce munies de moyens d'assemblage mutuel et de moyens de maintien du filtre, la première et deuxième pièces définissant, dans leur configuration assemblée une cavité dans laquelle le filtre est logé en étant maintenu, et au moins un joint d'étanchéité apte à réaliser l'étanchéité entre la cavité et l'extérieur, les moyens d'assemblage mutuel comprenant des premiers moyens de clipsage solidaires de la première pièce, des deuxièmes moyens de clipsage solidaires de la deuxième pièce et aptes à coopérer avec les premiers moyens afin de réaliser un clipsage des deux pièces;
- un appareil de prélèvement intégrant une pompe d'aspiration et un logement dans lequel est apte à être fixée de manière amovible la cassette en configuration assemblée des deux pièces pour réaliser le prélèvement des contaminants par la pompe d'aspiration.

Selon l'invention, l'agencement des rebords du logement de fixation de la cassette relativement aux moyens de clipsage est tel que ceux-ci ne peuvent être atteints physiquement que ce soit manuellement ou par un outil même adapté à leur déclipsage ,dans la configuration assemblée des pièces, lorsque la cassette est dans sa configuration fixée sur l'appareil.

Par l'expression « ne pas être accessibles depuis l'extérieur » , on entend que les moyens de clipsage ne peuvent être physiquement atteints ni manuellement ni même en utilisant un outil de déclipsage des moyens de clipsage des pièces de la cassette depuis l'espace extérieur au dispositif dans la configuration assemblée de la cassette, lorsqu'elle est dans sa configuration fixée sur l'appareil.

Ainsi, comparativement à la cassette de prélèvement selon la demande de brevet FR 2981154, on améliore la sécurisation de l'ouverture de la cassette car lorsqu'elle est fixée à l'appareil, même un outil adapté au déclipsage des moyens de clipsage des pièces, ne peut atteindre physiquement ces moyens.

La sécurisation de l'ouvertre de la cassette selon l'invention permet de limiter les risques de contamination du filtre. Les sources de contamination peuvent être classées en trois catégories que l'on peut énumérer comme suit :
- une sur-contamination qui augmenterait artificiellement la quantité de particules sur la cassette (dépôt),
- une diminution de la quantité de particules prélevées sur le filtre (grattage);
- une pollution de nature différente à celle échantillonnée.

Outre, le risque de contamination du filtre, l'ouverture de la cassette par un utilisateur non habilité pourrait se traduire par un échange malencontreux de filtres correspondant à différents travailleurs ce qui induirait une mauvaise assignation travailleur-filtre et conduirait donc à un mauvais suivi de l'exposition du travailleur à son poste de travail. Cette rupture de la traçabilité compromettrait le suivi de l'exposition des travailleurs aux nanomatériaux.

L'invention permet de renforcer cette sécurisation du prélèvement, la cassette une fois insérée dans son logement de fixation sur l'appareil ne permet plus l'utilisation de l'outil pour ouvrir cette dernière. La cassette doit préalablement être extraite de son logement. Ainsi, un utilisateur non habilité qui serait tout de même tenté d'ouvrir la cassette, serait obligé de retirer celle-ci de l'appareil sur lequel elle est fixée. On peut prévoir que cela a pour conséquence immédiate l'arrêt de la pompe d'aspiration de l'appareil. En outre, un système de détection approprié et intégré à l'appareil, tel qu'une alarme sonore et/ou visuelle, permet alors de détecter le retrait non souhaité de la cassette, et d'interrompre alors le prélèvement. En outre, un enregistrement de cette interruption peut alors être effectué.

La solution selon l'invention permet d'augmenter la compacité et la robustesse de la cassette de prélèvement, de l'outillage de production de la cassette ainsi que de l'outil d'ouverture de la cassette et d'en diminuer leur coût. La réduction de la taille de la cassette est avantageuse tant d'un point de vue ergonomique, que de la manipulation ou du stockage. Le gain en termes de coût matière est lié au fait qu'une cassette selon l'invention est plus compacte qu'une cassette selon la demande de brevet FR 2981154. Cette compacité implique un coût d'outillage de fabrication de la cassette (moules d'injection) également moins élevé que celui d'une cassette selon la demande de brevet FR 2981154.

Selon un mode de réalisation, les moyens de maintien du filtre comprennent deux épaulements réalisés l'un sur une périphérie interne de la première pièce et l'autre sur une périphérie interne de la deuxième pièce, le dispositif comprenant un porte-filtre maintenu par pincement entre les deux épaulements.

Selon une variante avantageuse, au moins l'une des pièces comprend une encoche débouchant de part en part du bord annulaire, le porte-filtre comprend une languette complémentaire à l'(aux) encoche (s) et sur laquelle est fixée un élément d'identification du filtre, de sorte que dans la configuration assemblée des pièces et dans la configuration fixée de la cassette à l'appareil, l'élément d'identification soit en contact avec l'environnement extérieur.

Par l'expression «en contact avec l'environnement extérieur», on entend que l'élément d'identification émerge dans l'espace extérieur au dispositif et à l'appareil dans la configuration assemblée de la cassette lorsqu'elle est fixée sur l'appareil.

L'élément d'identification est de préférence une puce électronique ou une étiquette d'identification par radio-fréquence (RFID) ou un code-barres bidimensionnelle, du type Datamatrix®. Il peut être fixé par une technique de collage, par gravure, par surinjection ou par tampographie. L'élément d'identification peut également être tout simplement des chiffres et/ou des lettres afin de pouvoir être visible et lu directement par un homme.

De manière cumulative ou alternative, on peut prévoir un élément d'identification du filtre constitué par au moins une étiquette d'identification par radio-fréquence (RFID), l'(les) étiquette(s) RFID étant logée(s) dans la première et/ou dans la deuxième pièce. De préférence, l'étiquette RFID peut être logée dans la pièce inférieure de la cassette. Cette variante a pour avantage de conserver une identification sur le filtre lui-même, et de pouvoir soumettre le filtre à des analyses qui pourraient altérer le circuit électronique d'une étiquette RFID. En effet, en logeant une étiquette RFID dans l'un et/ou l'autre pièces de la cassette, il n'y a plus d'électronique directement intégrée au filtre et porte-filtre, et donc une analyse subie par le filtre ne perturbe pas le circuit électronique de l'étiquette. Ceci a également pour avantage de permettre de rapprocher la puce RFID de l'appareil de prélevement et donc réduire la puissance d'émission de son antenne.

De préférence, le porte-filtre est déformable par compression afin d'être écrasé par la première et deuxième pièces en configuration assemblée et de constituer ainsi un joint d'étanchéité unique.

On peut prévoir au moins un joint en élastomère en appui contre au moins l'un des épaulements.

Le filtre peut être constitué de membranes en alumine ; en fibres de silice, quartz ou borosilicate ; en cellulose ou ses dérivés tel que la méthylcellulose (MCE); en polyfluorure de vinylidène (PVDF); en polyestersulfone (PES); en polystyrène (PS); en polytetrafluoroethylene (PTFE); en polycarbonate (PC). Généralement il est épais de quelques micromètres à quelques dizaines de micromètres, par exemple 10 à 200 micromètres. Typiquement, les filtres présentent une épaisseur comprise entre 5 et 30 µm.

Avantageusement, les premières et deuxièmes pièces et le porte-filtre sont à base de matière thermoplastique, de préférence en téréphtalate de polyéthylène (PET), en téréphtalate de polybuthylène (PBT), en polyméthacrylate de méthyle (PMMA), en polyamide 6 (PA6), en polyamide 66 (PA66), en polycarbonate (PC), en polypropylène (PP) ou en polyoxyméthylène Copolymère (POM-C).

Selon une variante avantageuse, les premiers moyens de clipsage sont constitués par un nombre égal à n de pattes élastiquement déformables dont l'extrémité est conformée avec une ouverture et agencées sur la première pièce en étant distantes relativement entre elles selon une position angulaire égale à 2π/n, et en ce que les deuxièmes moyens de clipsage sont constitués par un même nombre n d'excroissances conformés en étant complémentaires aux ouvertures et agencés sur la deuxième pièce en étant distants relativement entre eux selon la même position angulaire égale à 2π/n que les pattes.

Un exemple, ne faisant pas partie de l'invention, comprend un outil destiné à réaliser le déclipsage des deux pièces de la cassette, comprenant des pions agencés distants relativement entre eux selon la même position que les excroissances et aptes pour exercer une poussée sur ces derniers latéralement à l'axe longitudinal de la cassette.

L'outil peut comprendre en outre des moyens de guidage mécanique aptes à guider l'outil par le dessous de la pièce munie d'excroissances pour faciliter la poussée latérale simultanée des pions contre les excroissances.

L'invention a enfin pour objet l'utilisation d'un ensemble décrit ci-dessus en tant qu'ensemble de suivi d'exposition d'opérateurs en poste de fabrication de nano-objets, d'élaboration de nanomatériaux ou d'usage de produits en contenant.

### Description détaillée

D'autres avantages et caractéristiques ressortiront mieux à la lecture de la description détaillée, faite à titre illustratif et non limitatif, en référence aux figures suivantes parmi lesquelles:
- la figure 1 est une vue de profil de la cassette de prélèvement d'un dispositif de prélèvement selon l'invention, la cassette étant en configuration assemblée,
- la figure 1A est une vue de dessous de la cassette selon la figure 1 ;
- la figure 2 est une vue en perspective éclatée de la cassette selon les figures 1 et 1A montrant les deux pièces de la cassette en configuration non assemblée ;
- la figure 3 est une vue en coupe de la cassette selon les figures 1 à 2, montrant en outre un outil conforme à un exemple, ne faisant pas partie de l'invention, permettant l'ouverture sécurisée de la cassette ;
- la figure 4 est une vue en perspective montrant un ensemble de prélèvement selon l'invention avec un appareil intégrant une pompe d'aspiration et une cassette selon les figures 1 à 2 telle qu'elle est en configuration fixée sur l'appareil ;
- la figure 4A est une vue de détail en coupe de la figure 4 ;
- la figure 5 est une vue de dessous de la cassette selon la figure 1 et montrant une variante d'intégration d'une étiquette d'identification RFID;
- les figures 6 et 7 sont des vues respectivement en perspective et de dessus de la cassette selon les figures 1 à 2 montée dans son outil d'ouverture de ses pièces ;
- les figures 8 et 9 sont des vues en coupe de la figure 7 selon A-A, respectivement avant et après ouverture des pièces de la cassette.

Pour pouvoir réaliser un prélèvement de nano-objets susceptibles d'être contenus dans un aérosol, le dispositif selon l'invention comprend tout d'abord un filtre non représenté adapté pour piéger des nano-objets susceptibles d'être en suspension dans de l'air, logé et maintenu dans une cavité formée par une cassette en configuration fermée.

Ainsi, la méthode d'échantillonnage selon l'invention consiste à orienter la cassette fermée de telle sorte que l'air à analyser est aspiré par une pompe non représentée qui est intégrée à un appareil de prélèvement 6 sur lequel la cassette est fixée, l'air aspiré l'étant depuis un orifice 20 et sort par l'orifice 10 de la cassette pour ensuite aller vers la pompe.

L'aspiration peut bien être entendue prévue selon un trajet inverse, c'est-à-dire depuis l'orifice 10 vers l'orifice 20. Les nano-objets ou particules de taille micrométrique ainsi aspirés seront collectés sur le filtre maintenu dans la cassette. On prévoit dans la méthode d'échantillonnage selon l'invention d'orienter la cassette de manière à ce que prélèvement soit le plus représentatif de la respiration en se situant à moins de 30 cm des voies respiratoires.

Tel que représenté, le dispositif selon l'invention permet un prélèvement d'échantillon et le transport des nano-objets piégés, de manière sécurisée et avec une parfaite traçabilité.

L'ensemble de prélèvement et de transport de nano-objets selon l'invention comporte ainsi le dispositif avec cassette et filtre et l'appareil de prélèvement 6 sur lequel est fixée la cassette lors du prélèvement et qui intègre la pompe d'aspiration.

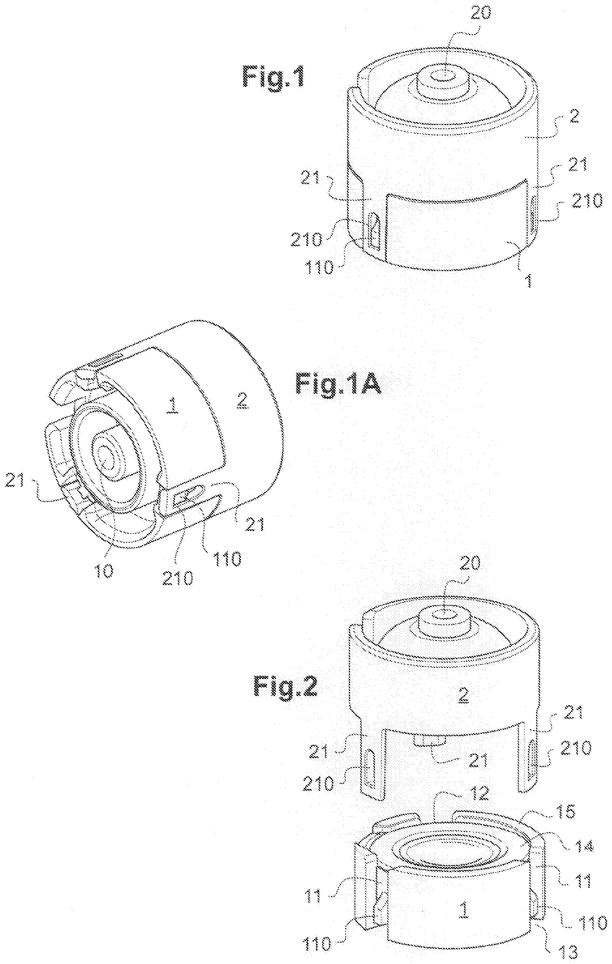

Tel qu'illustré aux figures 1 à 2, la cassette est constituée de deux pièces 1, 2 de forme générale cylindrique.

La pièce supérieure 2 est munie de pattes flexibles 21 ou autrement dit élastiquement déformables dont l'extrémité comporte une ouverture 210.

La pièce inférieure 1 est munie d'évidements 11 complémentaires individuellement à une patte 21 avec une extrémité comportant une excroissance complémentaire individuellement avec une ouverture 210. On peut bien entendu dans le cadre de l'invention prévoir un agencement des ouvertures ou excroissances complémentaires inversées, c'est-à-dire avec des excroissances individuellement dans un évidement de la pièce 2 et des pattes avec ouvertures sur la pièce 1.

L'agencement angulaire relatif entre pattes flexibles 21 de la pièce supérieure 2 est identique à celui des évidements 11 de la pièce inférieure 1.

Ainsi, en configuration assemblée mutuelle, les pattes 21, avec leurs ouvertures 210 viennent s'encastrer et se clipser précisément dans les évidements 11 et autour des excroissances 110 (figures 1A et 2).

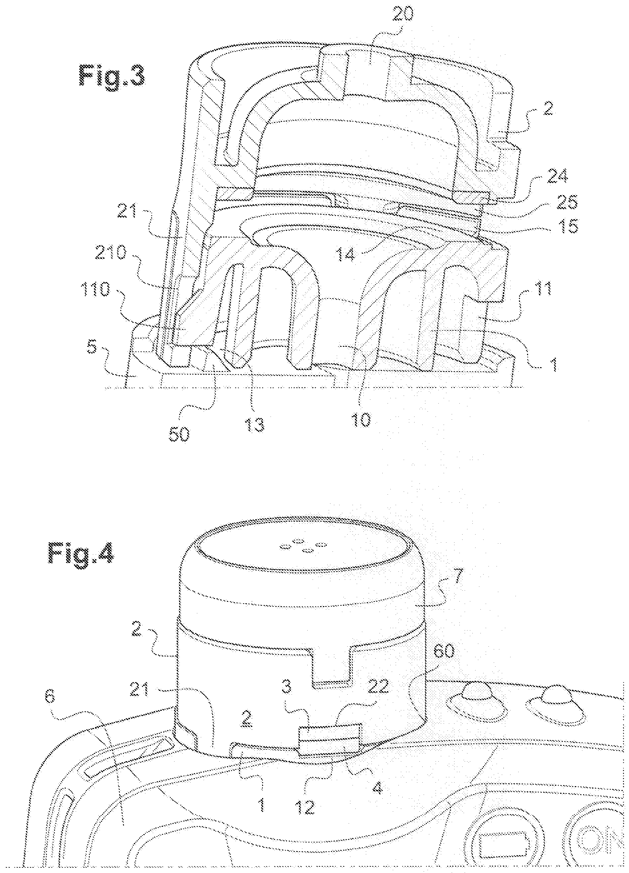

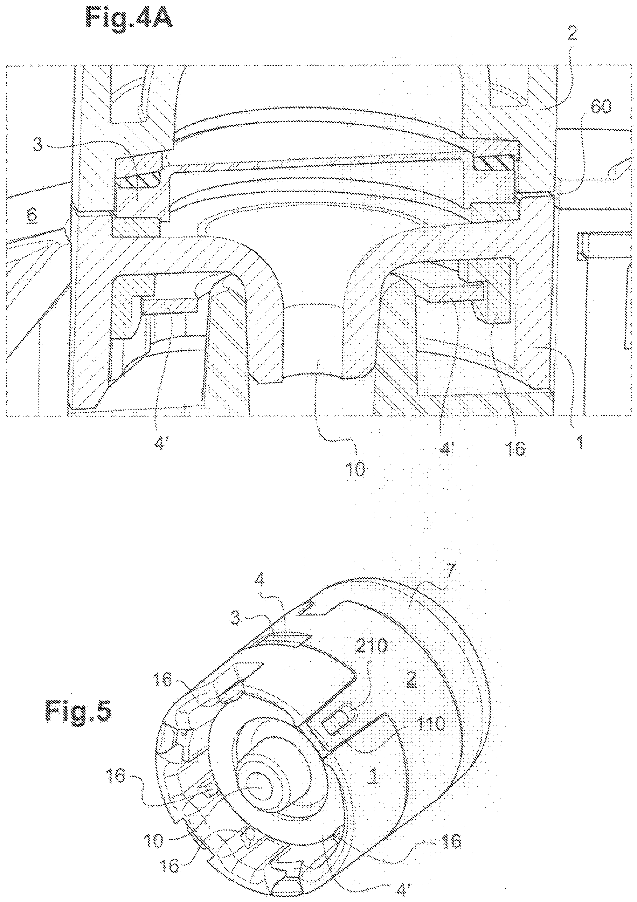

On a représenté en figures 4 et 4A la cassette avec les pièces 1, 2 assemblées entre elles telle qu'elle est fixée sur l'appareil de prélèvement 6 intégrant la pompe d'aspiration des contaminants.

Comme cela est visible sur ces figures 4 et 4A, dans cette configuration assemblée mutuelle des pièces 1, 2 et de la cassette fixée sur l'appareil 6, aucun moyen de clipsage 11, 110, 21, 210 n'est accessible depuis l'extérieur et ce même, avec un outil adéquat 5 comme décrit ci-après permet la désolidarisation des deux, pièces 1, 2. Autrement dit, l'agencement des rebords du logement de fixation 60 de la cassette relativement aux moyens de clipsage est tel que ceux-ci ne peuvent être atteints physiquement que ce soit manuellement ou par un outil même adapté à leur déclipsage.

Grâce à l'invention, on empêche toute ouverture intempestive de la cassette en dehors du laboratoire d'analyse prévu pour analyser précisément les particules piégées par le filtre.

Ainsi comparativement à la cassette selon la demande de brevet FR 2981154, on renforce la sécurisation du prélèvement, car la cassette une fois insérée dans son logement de fixation 60 sur l'appareil ne permet même pas l'utilisation de l'outil de déclipsage pour ouvrir cette dernière. La cassette doit préalablement être extraite de son logement. Ainsi, un utilisateur non habilité qui serait tout de même tenté d'ouvrir la cassette, serait obligé de retirer celle-ci de l'appareil sur lequel elle est fixée. On peut prévoir que cela a pour conséquence immédiate l'arrêt des moyens d'aspiration de l'appareil. En outre, un système de détection approprié et intégré à l'appareil, tel qu'une alarme sonore et/ou visuelle, permet alors de détecter le retrait non souhaité de la cassette, et d'interrompre alors le prélèvement. En outre, un enregistrement de cette interruption peut alors être effectué.

On limite ainsi les risques de contamination de ce dernier non représentatifs réellement de l'échantillonnage qui pourraient intervenir soit par augmentation de la quantité de particules piégées par le filtre, soit par diminution de la quantité de particules piégées sur le filtre (grattage) soit par ajout de particules de nature différente à celles échantillonnées.

Comme cela est mieux visible en figure 4A, dans la configuration fixée de la cassette 1, 2 sur l'appareil de prélèvement 6, l'orifice 10 de la pièce inférieure 1 de la cassette est en communication fluidique étanche avec l'orifice d'aspiration 61 prévu dans le corps de l'appareil de prélèvement 6.

La pièce inférieure 1 est munie de trous 13 débouchant à la fois à l'extérieur et sur la zone où sont agencées les excroissances 110, c'est-à-dire au niveau de la zone où excroissances 110 coopérent par clipsage avec les pattes 21 avec leurs ouvertures 210 correspondantes. Il y a donc autant de trous 13 que de moyens de clipsage complémentaires.

La pièce supérieure 2 présente trois pattes flexibles 21, positionnés à 120° les uns des autres qui viennent s'encastrer précisément dans les évidements 11 de la pièce inférieure 1.

Une fois le prélèvement effectué, on arrête la pompe de l'appareil puis on démonte la cassette de son logement de fixation 60 de l'appareil et on réalise alors l'ouverture de la cassette de prélèvement, c'est-à-dire le déclipsage des deux pièces 1,2.

Pour réaliser le déclipsage des deux pièces 1,2, on procède de la manière suivante.

On amène tout d'abord la pièce inférieure 1 de la cassette sur le dessus de l'outil 5 en regard des pions 50.

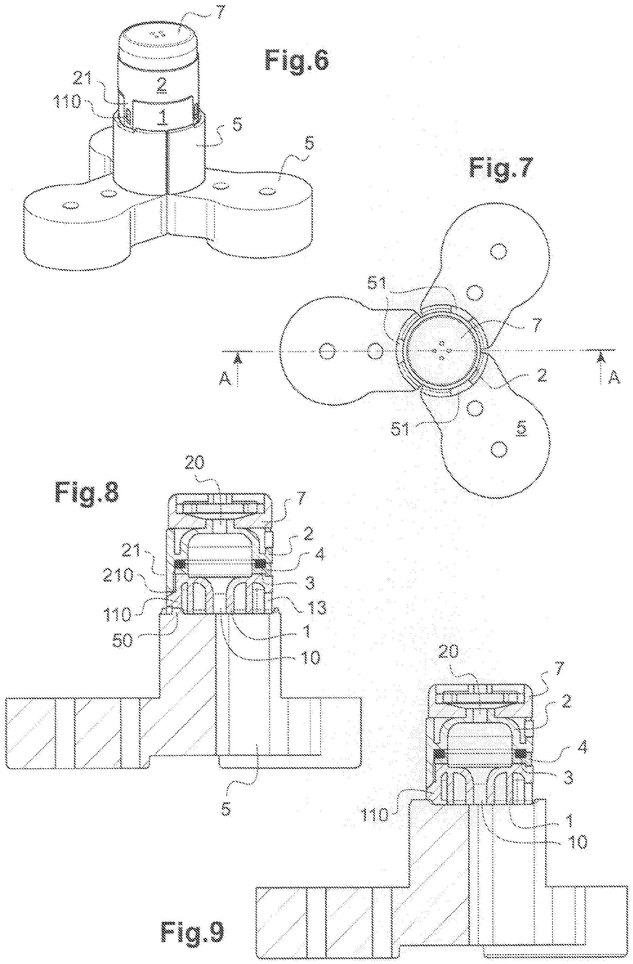

On insère dans chaque trou 13 un pion 50 de longueur suffisante pour atteindre la patte 21 en position clipsée de son ouverture 210 autour d'une excroissance 110 (figure 8). Ainsi, un effort de poussée vers le haut sur les pions 50 logés dans les trous 13 génère un effort de poussée latéral sur les pattes 21 qui se décrochent alors de leur excroissance 110 correspondante, ce qui désolidarise les deux pièces 1, 2 (figure 9).

Avantageusement, tous les pions 50 sont fixés sur un outil 5 représenté en figures 6 à 9 qui comprend également des pattes rigides 51 distantes entre elles de telle sorte à pouvoir loger le corps cylindrique de la pièce inférieure 1. Autrement dit, ces pattes rigides 51 servent de guidage pour faciliter la poussée simultanée des pions 50 contre les pattes 21.

Alternativement, les pattes peuvent être situées sur la pièce inférieure et les trous sur la pièce supérieure, sans sortir du cadre de l'invention.

Le filtre est quant à lui supporté par un porte filtre. En configuration assemblée des deux pièces 1, 2, le porte-filtre 3 est maintenu pincé entre les deux épaulements 14, 24 réalisés chacun sur une périphérie interne d'une des deux pièces 1, 2.

Avantageusement, le porte-filtre 3 est choisi en un matériau déformable élastiquement et présente alors une fonction supplémentaire de joint d'étanchéité entre les pièces inférieure 1 et supérieure 2 de la cassette. Autrement dit, on peut prévoir avantageusement un porte filtre 3 à dureté plus faible que les matériaux des pièces 1 et 2 de la cassette, afin de s'écraser contre les épaulements 14, 24 en regard, par pression lors du clipsage. Le porte-filtre 3 ayant pour fonction d'être un support mécanique au filtre, il peut être de conformation globalement annulaire ou bien fait d'une pièce massive parcourue d'une multitude de trous débouchant via des canaux droits dans l'épaisseur de la pièce, cette multitude de trous formant alors le filtre en lui-même.

On veille de toute façon à ce qu'il génère un minimum de pertes de charge au niveau de l'aspiration.

Selon une variante, les pièces 1, 2 de la cassette comprennent chacune une encoche 12, 22 débouchant de part en part du bord annulaire. Le porte-filtre 3 comprend une languette 4 complémentaire aux encoches 12, 22 et sur laquelle peut être réalisé un élément d'identification du filtre, de sorte que dans la configuration assemblée des pièces et dans la configuration fixée de la cassette à l'appareil, l'élément d'identification soit en contact avec l'environnement extérieur.

Comme illustré en figures 4A et 5, on peut également prévoir un élément d'identification du filtre constitué par une étiquette d'identification par radio-fréquence (RFID) 4' qui est logée dans la pièce 1 inférieure de la cassette. La fixation de l'étiquette RFID 4' peut être avantageusement réalisée par clipsage dans des pattes de maintien 16 prévues à cet effet dans une partie de la pièce inférieure 1 qui constitue un logement physiquement protégé de l'extérieur. Cette variante a pour avantage de conserver une identification sur le filtre lui-même, et de pouvoir soumettre le filtre à des analyses qui pourraient altérer le circuit électronique l'étiquette RFID 4'. En effet, en logeant une étiquette RFID 4' dans la pièce 1 de la cassette, il n'y a plus d'électronique directement intégrée au filtre et porte-filtre 3, et donc une analyse subie par le filtre ne perturbe pas le circuit électronique de l'étiquette. Ceci a également pour avantage de permettre de rapprocher la puce RFID de l'appareil de prélevement et donc réduire la puissance d'émission de son antenne.

En fonction des besoins, on peut utiliser de manière cumulative ou alternative, un élément d'identification 4 et/ou une étiquette d'identification 4'. Par exemple, on peut utiliser un code à chiffres et/ou lettres 4 visible à l'œil nu par une personne depuis l'extérieur et une étiquette 4' logée dans la pièce inférieure 1. On peut aussi utiliser uniquement un code à chiffres et/ou lettres 4 ou uniquement une étiquette RFID 4'.

Pour améliorer encore l'assemblage mutuel entre les deux pièces 1 et 2, on peut prévoir sur chacune d'entre elles un bord annulaire 15, 25 afin de réaliser en plus du clipsage, un appui surfacique mutuel entre les pièces dans leur position assemblée.

Avantageusement, comme illustré en figure 4, un dispositif de réduction du bruit d'aspiration 7 est fixé sur la pièce supérieure 2 tel que décrit et revendiqué dans la demande de brevet déposée ce jour par la demanderesse et intitulée « Dispositif de prélèvement et de transport de nano-objets contenus dans des aérosols, à cassette avec module adapté pour réduire le bruit d'aspiration lors du prélèvement».

## Revendications

1. Ensemble de prélèvement et de transport de nano-objets susceptibles d'être présents dans un aérosol en vue de leur analyse, comprenant:
- un dispositif comprenant un filtre d'échantillonnage poreux apte à piéger les nano-objets susceptibles d'être en suspension dans l'aérosol, une cassette constituée d'une première pièce (1) et d'une deuxième pièce (2) munies de moyens d'assemblage mutuel (11, 110; 21, 210) et de moyens de maintien (14, 24) du filtre, la première et deuxième pièces définissant, dans leur configuration assemblée une cavité dans laquelle le filtre est logé en étant maintenu, et au moins un joint d'étanchéité apte à réaliser l'étanchéité entre la cavité et l'extérieur, les moyens d'assemblage mutuel comprenant des premiers moyens de clipsage (11) solidaires de la première pièce, des deuxièmes moyens de clipsage (21) solidaires de la deuxième pièce et aptes à coopérer avec les premiers moyens afin de réaliser un clipsage des deux pièces;
**caractérisé en ce que** l'ensemble comprend
- un appareil de prélèvement (6) intégrant une pompe d'aspiration et comprenant un logement (60) dans lequel est apte à être fixée de manière amovible la cassette en configuration assemblée des deux pièces (1, 2) pour réaliser le prélèvement des nano-objets par la pompe d'aspiration, ensemble dans lequel l'agencement des rebords du logement (60) relativement aux moyens de clipsage (11, 110 ; 21, 210) est tel que ceux-ci ne peuvent être atteints physiquement que ce soit manuellement ou par un outil même adapté à leur déclipsage, dans la configuration assemblée des pièces, lorsque la cassette est dans sa configuration fixée sur l'appareil.

2. Ensemble de prélèvement et de transport selon la revendication 1, les moyens de maintien du filtre comprenant deux épaulements (14, 24) réalisés l'un sur une périphérie interne de la première pièce et l'autre sur une périphérie interne de la deuxième pièce, le dispositif de l'ensemble comprenant un porte-filtre (3) maintenu par pincement entre les deux épaulements.

3. Ensemble de prélèvement et de transport selon la revendication 2, au moins l'une des pièces comprenant une encoche (12, 22) débouchant de part en part d'un bord annulaire, le porte-filtre comprenant une languette complémentaire à l'(aux) encoche (s) et sur laquelle est fixée un élément d'identification (4) du filtre, de sorte que dans la configuration assemblée des pièces et dans la configuration fixée de la cassette à l'appareil, l'élément d'identification soit en contact avec l'environnement extérieur.

4. Ensemble de prélèvement et de transport selon la revendication 1, comprenant un élément d'identification (4') du filtre constitué par au moins une étiquette d'identification par radio-fréquence, RFID, l'(les) étiquette(s) RFID étant logée(s) dans la première et/ou dans la deuxième pièce.

5. Ensemble de prélèvement et de transport selon la revendication 1, dans laquelle les deuxième moyens de clipsage sont constitués par un nombre égal à n de pattes (21) élastiquement déformables dont l'extrémité est conformée avec une ouverture (210) et agencées sur la première pièce en étant distantes relativement entre elles selon une position angulaire égale à 2π/n, et en ce que les premier moyens de clipsage sont constitués par un même nombre n d'excroissances (110) conformés en étant complémentaires aux ouvertures et agencés sur la deuxième pièce en étant distants relativement entre eux selon la même position angulaire égale à 2π/n que les pattes.

6. Ensemble de prélèvement et de transport selon la revendication 1, l'appareil de prélèvement comportant des moyens de commande d'arrêt de la pompe d'aspiration en cas de retrait de la cassette lors d'un prélèvement.

7. Ensemble de prélèvement et de transport selon la revendication 6, l'appareil de prélèvement comportant des moyens d'alerte en cas de retrait de la cassette lors d'un prélèvement, tels que des moyens sonores et/ou visuels.

8. Utilisation d'un ensemble selon la revendication 1 en tant qu'ensemble de suivi d'exposition d'opérateurs en poste de fabrication de nano-objets, d'élaboration de nanomatériaux ou de l'utilisation de produits en contenant.

## Patentansprüche

1. Anordnung zur Aufnahme und zum Transport von Nanoobjekten, die möglicherweise in einem Aerosol vorhanden sind, zwecks ihrer Analyse, umfassend:
- eine Vorrichtung, umfassend ein poröses Probenahmefilter, das geeignet ist, die Nanoobjekte einzufangen, die sich möglicherweise in dem Aerosol in Suspension befinden, eine Kassette, die aus einem ersten Teil (1) und einem zweiten Teil (2) besteht, die mit Mitteln zum gegenseitigen Verbinden (11, 110; 21, 210) und mit Mitteln zum Halten (14, 24) des Filters versehen sind, wobei das erste und das zweite Teil in ihrer verbundenen Konfiguration einen Hohlraum definieren, in welchem das Filter aufgenommen ist und dabei gehalten wird, und wenigstens eine Dichtung, die geeignet ist, die Dichtigkeit zwischen dem Hohlraum und der äußeren Umgebung herzustellen, wobei die Mittel zum gegenseitigen Verbinden erste Einrastmittel (11), die mit dem ersten Teil fest verbunden sind, und zweite Einrastmittel (21), die mit dem zweiten Teil fest verbunden sind und geeignet sind, mit den ersten Mitteln zusammenzuwirken, um eine Verrastung der zwei Teile durchzuführen, umfassen;
**dadurch gekennzeichnet, dass** die Anordnung umfasst:
- eine Aufnahmeeinrichtung (6), in die eine Saugpumpe integriert ist und die einen Aufnahmeraum (60) umfasst, in welchem die Kassette in der verbundenen Konfiguration der zwei Teile (1, 2) lösbar befestigbar ist, um die Aufnahme der Nanoobjekte durch die Saugpumpe durchzuführen, wobei in der Anordnung die Ränder des Aufnahmeraumes (60) in Bezug auf die Einrastmittel (11, 110; 21, 210) derart angeordnet sind, dass die Letzteren in der verbundenen Konfiguration der Teile, wenn sich die Kassette in ihrer an der Einrichtung befestigten Konfiguration befindet, physisch nicht erreicht werden können, weder manuell noch durch ein zum Lösen ihrer Verrastung geeignetes Werkzeug.

2. Anordnung zur Aufnahme und zum Transport nach Anspruch 1, wobei die Mittel zum Halten des Filters zwei Ansätze (14, 24) umfassen, von denen einer an einem Innenumfang des ersten Teils und der andere an einem Innenumfang des zweiten Teils hergestellt ist, wobei die Vorrichtung der Anordnung einen Filterträger (3) umfasst, der durch Festklemmen zwischen den zwei Ansätzen gehalten wird.

3. Anordnung zur Aufnahme und zum Transport nach Anspruch 2, wobei wenigstens eines der Teile eine Aussparung (12, 22) umfasst, die beiderseits eines ringförmigen Randes mündet, wobei der Filterträger eine Zunge umfasst, die zu der (den) Aussparung (en) komplementär ist und an der ein Element zur Identifikation (4) des Filters befestigt ist, so dass in der verbundenen Konfiguration der Teile und in der an der Einrichtung befestigten Konfiguration der Kassette das Element zur Identifikation sich in Kontakt mit der äußeren Umgebung befindet.

4. Anordnung zur Aufnahme und zum Transport nach Anspruch 1, welche ein Element zur Identifikation (4') des Filters umfasst, das aus wenigstens einem Funkidentifikationsetikett, RFID-Etikett, besteht, wobei das (die) RFID-Etikett(en) im ersten und/oder im zweiten Teil aufgenommen ist (sind).

5. Anordnung zur Aufnahme und zum Transport nach Anspruch 1, wobei die zweiten Einrastmittel aus einer Anzahl n von elastisch verformbaren Laschen (21) bestehen, deren Ende mit einer Öffnung (210) ausgebildet ist und die an dem ersten Teil angeordnet sind, wobei sie in Winkelabständen von 2π/n voneinander angeordnet sind, und dadurch, dass die ersten Einrastmittel aus derselben Anzahl n von Vorsprüngen (110) bestehen, die so ausgebildet sind, dass sie komplementär zu den Öffnungen sind, und die an dem zweiten Teil angeordnet sind, wobei sie in denselben Winkelabständen von 2π/n voneinander angeordnet sind, wie die Laschen.

6. Anordnung zur Aufnahme und zum Transport nach Anspruch 1, wobei die Aufnahmeeinrichtung Mittel zur Steuerung des Anhaltens der Saugpumpe im Fall eines Entfernens der Kassette während einer Aufnahme aufweist.

7. Anordnung zur Aufnahme und zum Transport nach Anspruch 6, wobei die Aufnahmeeinrichtung Mittel zum Warnen im Fall eines Entfernens der Kassette während einer Aufnahme aufweist, wie etwa akustische und/oder optische Mittel.

8. Verwendung einer Anordnung nach Anspruch 1 als Anordnung zur Überwachung der Exposition von Beschäftigten an Arbeitsplätzen zur Herstellung von Nanoobjekten, Entwicklung von Nanomaterialien oder Verwendung von Produkten, die solche enthalten.

## Claims

1. Assembly for sampling and transporting of nano-objects liable to be present in an aerosol for the purposes of their analysis, comprising:
- a device comprising a porous sampling filter able to trap the nano-objects liable to be in suspension in the aerosol, a cassette composed of a first piece (1) and a second piece (2) provided with means of mutual assembly (11, 110; 21, 210) and means (14, 24) of holding the filter, the first and second pieces in their assembled configuration defining a cavity in which the filter is lodged while being held, and at least one gasket able to produce tightness between the cavity and the outside, the means of mutual assembly comprising first clipping means (11) integrated with the first piece, and second clipping means (21) integrated with the second piece and able to cooperate with the first means in order to bring about a clipping of the two pieces;
**characterized in that** the assembly comprises
- a sampling apparatus (6) integrating a suction pump and comprising a seat (60) in which the cassette can be secured in a removable manner when the two pieces (1, 2) are in the assembled configuration to accomplish the sampling of the nano-objects by the suction pump,
in which assembly the arrangement of the edges of the seat (60) relative to the clipping means (11, 110; 21, 210) is such that they cannot be reached physically, either manually or by a tool, even one adapted to their unclipping, in the assembled configuration of the pieces, when the cassette is in its configuration secured to the apparatus.

2. Assembly for sampling and transporting according to Claim 1, the means of holding the filter comprising two shoulders (14, 24), one produced on an internal periphery of the first piece and the other on an internal periphery of the second piece, the device of the assembly comprising a filter holder (3) held by squeezing between the two shoulders.

3. Assembly for sampling and transporting according to Claim 1, at least one of the pieces comprising a notch (12, 22) running straight through an annular rim, the filter holder comprising a tongue that is complementary to the notch (or notches) and to which an identification element (4) of the filter is secured, such that, in the assembled configuration of the pieces and in the configuration of the cassette secured to the apparatus, the identification element is in contact with the outer environment.

4. Assembly for sampling and transporting according to Claim 1, comprising an identification element (4') of the filter constituted by at least one radiofrequency identification, RFID, tag, the RFID tag(s) being lodged in the first and/or in the second piece.

5. Assembly for sampling and transporting according to Claim 1, wherein the second clipping means are formed by a number, equal to n, of elastically deformable feet (21) whose end comprises an opening (210) and which are arranged on the first piece, being spaced apart by an angular position equal to 2π/n, and in that the first clipping means are formed by a same number n of protrusions (110) of complementary shape to the openings and arranged on the second piece, being spaced apart by the same angular position equal to 2π/n as the feet.

6. Assembly for sampling and transporting according to Claim 1, the sampling apparatus comprising means of commanding the stoppage of the suction pump in the event of removal of the cassette during a sampling process.

7. Assembly for sampling and transporting according to Claim 6, the sampling apparatus comprising means of alert in the event of removal of the cassette during a sampling process, such as sound and/or visual means.

8. Use of an assembly according to Claim 1 as an assembly for tracking the exposure of workers at a manufacturing station for nano-objects, processing of nano-materials, or use of products containing them.
